# EUROPEAN PATENT SPECIFICATION

(11) **EP 4 591 239 B1**
(45) Date of publication and mention of the grant of the patent: **11.11.2026**
(21) Application number: 23777034.2
(22) Date of filing: 12.09.2023
(51) Int. Cl.: G06N 10/70, G06N 10/20, G06N 10/40, G06N 10/60

(54) **DIAGNOSTIC METHOD OF A QUANTUM APPARATUS AND RELATIVE QUANTUM APPARATUS**
DIAGNOSEVERFAHREN EINER QUANTENVORRICHTUNG UND ZUGEHÖRIGE QUANTENVORRICHTUNG
PROCÉDÉ DE DIAGNOSTIC D'UN APPAREIL QUANTIQUE ET APPAREIL QUANTIQUE ASSOCIÉ

(30) Priority: 21.09.2022 IT 202200019341
(43) Date of publication of application: 30.07.2025
(73) Proprietor: ROTONIUM S.R.L., 33013 UD Gemona del Friuli (IT)
(72) Inventor: TAMBURINI, Fabrizio, 30174 VENEZIA (IT); SIAGRI, Roberto, 33011 ARTEGNA (UD) (IT)
(74) Representative: Busca, Andrea
(86) International application number: PCT/IB2023/059014
(87) International publication number: WO 2024/062338

(56) References cited:
- FABRIZIO TAMBURINI ET AL: "Testing the equivalence principle and discreteness of spacetime through the t^3 gravitational phase with quantum information technology", ARXIV.ORG, CORNELL UNIVERSITY LIBRARY, 201 OLIN LIBRARY CORNELL UNIVERSITY ITHACA, NY 14853, 19 August 2021 (2021-08-19), XP091034684

## Description

The present invention relates to a diagnostic method of a quantum apparatus and a relative quantum apparatus. The invention further relates to a diagnostic and corrective method where a diagnostic step of the type indicated above is combined with a computation step including a corrective procedure of the result to reduce or eliminate the decoherence errors of the quantum-mechanical states involved in the quantum computation.

### DEFINITIONS

A **quantum apparatus** is an apparatus dominated or governed by the laws we associate with quantum mechanics, by which is meant any apparatus adapted to carry out at least one 'quantum computation.'

**Quantum computation** refers to 'any process carried out by a quantum circuit' such as any of the following operations based on the laws of quantum mechanics: measuring, generating, manipulating quantum states, sequences of symbols derived therefrom, et similia, without further restrictions.

A quantum apparatus comprises at least one **'quantum circuit',** e.g., part of a quantum processor, configured to construct output data on the basis of said quantum computation.

The output data can be quantum (qubits), classical (bits), or extensions thereof such as qudits or combinations thereof, usually in string form.

The quantum circuit also has input data, which preferably comprises classical data, such as bits, objects, events, symbols or signals even in the quantum regime, usually in string form.

The quantum computation is used to construct output data on the basis of input data.

Quantum apparatuses can comprise a quantum computer, a network thereof, a quantum data transmission device, sensors, classics and combinations thereof, or a network thereof.

The definition of a quantum apparatus also includes quantum cryptographic systems, possibly coupled with other 'classical' devices, adapted to generate cryptographic keys or sequences of objects, events, or symbols.

The concept of an 'event' is understood as a generic physical manifestation occurring within the Universe or any Multiverses or even more abstractly in Metaverses.

It is thus understandable how, for example, the apparatus can be a quantum sensor, whereby the quantum computation is in this case a measurement.

Each of such quantum apparatuses are made on relative pieces of hardware, referred to herein as supporting hardware apparatuses.

A quantum apparatus can contain a single quantum circuit or a set thereof.

For the sake of completeness, we note that the quantum computation is based on **quantum bits,** also known as **'qubits.'** A qubit is understood according to the known definition of quantum mechanics, i.e., a quantum of information represented by a unit vector of a Hilbert space. The quantum computation can also be based on qubit extensions, of which the **'qudit'** (extension of the qubit with a broader base) is now known; for the sake of simplicity, the term qubit will henceforth also include the qudit. Qubits are, for example, states of subatomic particles such as photons or electrons, where since each particle, due to the superposition principle, can be in several different states at the same time and with different probabilities, it is possible to 'overcome' the dualism of the classical binary 0/1 codes and convey much more information, thus being able to carry out several operations simultaneously.

### STATE OF THE ART

It is well known that the systems for quantum computations are undergoing ever-increasing development, offering new horizons of hitherto unimaginable computing power and services which will affect and involve an ever-increasing number of users and activities in the future.

It is also well known that the growing demand for greater computational capacity has taken the quest for the classical computer based on standard bits practically to its physical limit in terms of materials and circuitry, despite the fact that modern electronic technologies allow the use of ever-faster computers, beyond the petabit, capable of reaching very high computational efficiencies (expressed in terms of bits per second).

In this scenario, it is particularly important to develop new methods together with new technological solutions which allow to make deeper use of knowledge of the laws of nature to solve the increasingly complex computational problems as are now required.

Also in this context, the computation process performed by means of quantum logic, known as quantum computation, is of particular importance, which has recently proven to be much more powerful for solving certain classes of problems than with respect to classical computation. This superiority derives from the ability of the quantum analogue of the bit, the qubit, to maintain a stable coherence between different classical states being expressed as a coherent superposition of 0 and 1 states representing knowledge related to the classical bit. This property allows the quantum computer to perform computations on many classical input states simultaneously, allowing a quantum computer to have, at least in theory, an exponential increase in computation speed.

Well-known examples of this are apparatuses for detecting quantum effects, from astronomy to other experimental sciences, communication, quantum and classical cryptography and the combination thereof, to quantum computation.

In practical reality, however, the problem of the decoherence of the quantum-mechanical states involved in quantum computation is well known. Each quantum-mechanical state of a particle, an ion, a photon, etc. etc. is in fact dramatically affected by the influence of the surroundings environment and thus loses its quantum-mechanical identity or property which we would like to use for the quantum computation (i.e., it undergoes decoherence) and thus invalidates the result.

Error correction procedures exist in the literature which consist of using a large number of these qubits in a control procedure which sacrifices, during the computation, a certain number of qubits which could be used in the computation, thus reducing the computational capacity of the apparatus, or is sometimes repeated with each computation. This sacrifices most of the qubits, meaning values up to around 80%, and therefore erodes the full computing capacity, relegated to the use of the remaining qubits.

Instead of using the total N number of qubits which could be used for the computation, k qubits will be used for error correction, leaving N-k qubits available for the computation or for a quantum register. Thereby, the Hilbert space of dimension N associated with the computation is reduced to a subspace of dimension N-k for the computation and another subspace of dimension k for the error correction.

In addition to this, there are also other problems which can arise when the device is no longer in optimal condition, i.e., when some component malfunctions.

We have noted that in the past, Prof. Tamburini, the inventor of this patent application, was the author of the scientific article - Fabrizio Tamburini et al: "Testing the equivalence principle and discreteness of spacetime through the t^3 gravitational phase with quantum information technology" ARXIV.ORG, CORNELL UNIVERSITY LIBRARY, 201 OLIN CORNELL UNIVERSITY LIBRARY ITHACA, NY 14853, 19 August 2021, XP091034684.

The paper describes the possibility of detecting perturbations of the space-time foam fluctuations at the Planck scales, which are hypothetically characterised by random fluctuations of space and time which can be described by means of white noise if the gravity is that of Einstein and the fluctuations are those which were hypothesised in the 1960s by Wheeler. Each space-time fluctuation is independent of the next. If there are other fluctuations such as that described by the so-called t^3 factor which locally modifies the behaviour of space-time at the Planck scales and other characteristic scales, these are expected to give rise to different fluctuations of the gravitational field with the result of changing the stochastic process describing them, and thus in jargon are said to 'colour' this process of space-time fluctuations. These are known mathematical techniques employed in various fields of physics and statistics.

Therefore, the paper compares a standard-gravity white noise at Planck scales with that expected by the t^3 factor which goes to changing the gravitation itself and has temporal correlations and characteristic scales which are statistically described as a stochastic non-white noise process trivially called coloured noise.

However, to date, this purely theoretical teaching is hardly transferable to a practical diagnostic detection procedure. Reaching the Planck scales would require energies which are not currently available to our technology and could lead to the creation of mini black holes or wormholes.

The work in question firstly does not teach any practical application of the principle to a machine, and even if a person skilled in the art applied it, they would get nothing more than knowledge of the perturbation which coloured the white input, but would not know how to discern whether this was a malfunction or not. In fact, the paper does not describe machines or tools adapted to correct errors, but thought experiments to be able to characterise the space-time fluctuations of the space-time 'foam' to see if it is Wheeler's or something else. Perhaps future measurements with distant quasars or other ultra-high energy phenomena in the cosmos will be able to give some indication, but such a thing has nothing to do with error corrections of a machine or any apparatus whatsoever.

Moreover, since the paper's term of comparison is between what is called 'coloured' noise of the fluctuations with the t^3 factor, with well-defined characteristics derived from theory (i.e., it is not a generic 'coloured' noise but is a well-defined stochastic process) and white noise, which describes fluctuations which are not in the least connected to each other, the teaching is destined to remain merely theoretical and not applicable to a real machine which can be made with current technology, if only because it would be necessary to have a way of measuring at those very high energies to compare the fluctuations of the gravitational field at very high energies with white noise as a term of comparison. No apparatus capable of detecting it is known to date. Therefore, the comparison can only be made theoretically.

The need for a diagnostic procedure of a quantum computing apparatus therefore remains latent in the industry.

The object of the present invention is to detect anomalies in a quantum apparatus while maintaining high computing power.

A further object of the present invention is to eliminate or at least reduce quantum computing errors while maintaining high computing power.

Another preferred object of the present invention is to provide a diagnostic procedure and a procedure for correcting computation errors from decoherence errors collaborating with each other in increasing the computation power available with respect to the known art.

A further preferred object is to provide a diagnostic procedure compatible with various procedures for correcting computation errors due to the decoherence of the quantum-mechanical states involved in quantum computing.

A further preferred object is to provide a diagnostic and possibly corrective method for a quantum apparatus and a relative quantum apparatus which is simple and inexpensive to implement.

### GENERAL INTRODUCTION

The invention is set out in the appended claims. The dependent claims set out particular embodiments.

According to a first general aspect thereof, the present invention relates to a diagnostic method for a quantum apparatus comprising the following steps:
- arranging a quantum computing apparatus
- characterising the quantum computing apparatus, obtaining and storing an output characteristic noise corresponding to an input white noise;
- characterising at least one operation of the apparatus following that of the previous step, obtaining an output diagnostic noise corresponding to an input white noise;
- performing a stochastic analysis comparing the output diagnostic noise and the stored output characteristic noise, where if the deviation therebetween is greater than a predetermined value, generating at least one fault indication.

Advantageously, it is not necessary to reiterate this diagnosis with each computation, whereby once the successful apparatus operation has been established, it is possible to perform quantum computations at full power, associating simple procedures for correcting decoherence errors.

Obtaining the output diagnostic noise is preferably a reiteration of obtaining the output characteristic noise, whereby the comparison therebetween basically verifies that such noise is stable over the various reiterations, barring a predetermined error, and this can be done for example by verifying the stability of a fractal exponent.

With respect to the previous theoretical teaching in the paper on space-time fluctuations at Planck scales by Prof. Tamburini cited in the preamble, the invention advantageously solves the problem left open of providing a diagnostic procedure applicable to a machine. The problem is solved by comparing two coloured outputs, i.e., two different stochastic processes, one characteristic and one diagnostic, derived from apparatus 'operation.'

The teaching of said paper with respect to the invention represents a misdirection, since even admitting applying it to a machine would have suggested nothing more than comparing the input white noise with the corresponding coloured noise, generated however by other types of space-time fluctuations, consequently it would have detected the perturbation (gravitational or otherwise) which coloured the input expected from Einstein's gravitation with Wheeler's space-time foam model or a gravitational wave, but this is well beyond the experimental capabilities needed for a quantum computing machine or other similar apparatus. In fact, no comparison would have been obtained between two coloured outputs, one characteristic, used as a comparison term, and one diagnostic.

Preferably, said output noises comprise at least one characterising stochastic distribution and at least one diagnostic stochastic distribution, respectively.

Preferably, said outputs are obtained by means of quantum computation starting from said inputs.

According to some preferred embodiments, said stochastic analysis is done using a stochastic test for diagnostic purposes, using fractal geometry.

In such a case, preferably said stochastic analysis:
- associates at least one value of at least one fractal comparison parameter with each of the two output noises,
- reiterates the computations for obtaining both output characteristic and diagnostic noise until the deviation from the mean value of each of said respective comparison parameters tends to the zero limit with a value of at least two, preferably three, more preferably five statistical sigma;
said comparison between the output diagnostic noise and the stored output characteristic noise envisages that if said mean values with said deviation reduced to zero with a value of at least two, preferably three, more preferably five statistical sigma of said parameters of the two outputs are different from each other less than said predetermined value, said at least one fault indication is generated. For example, the predetermined value is proportional to the number of sigmas chosen for the test.

According to some preferred embodiments, the fractal parameter is the Hurst exponent, and where the method associates:
- a value H = 1/2 of the Hurst exponent to the input white noise
- a value 0<Hdf<1 of the Hurst exponent to the output characteristic noise (which is =1/2 in the event of an output white noise or ≠ 1/2 in the event of an output coloured noise)
- a value 0<Hdd<1 of the Hurst exponent to the output diagnostic noise, (which is =1/2 in the event of a output white noise or ≠ 1/2 in the event of an output coloured noise)
where if the average values with said deviation reduced to zero of Hdd and Hdf are different, unless a predetermined error is indicated, a fault is reported.

In cases in which at least Hdf is equal to 1/2, or that the mean values with said deviation reduced to zero are identical, are not excluded.

For example, the predetermined error takes into account the number of sigmas chosen for the test; the more sigmas the higher the accuracy

Preferably, the method is characterised in that:
- the step of obtaining and storing an output characteristic noise comprises the step of obtaining a set of characteristic stochastic distributions, identified by relative fractal exponents (Hdf1,....Hdfn), where each exponent of the set corresponds to an internal configuration of the quantum apparatus;
- similarly, the step of obtaining an output diagnostic noise comprises the step of obtaining a corresponding set of successive stochastic diagnostic distributions, and the relative fractal exponents, (Hdd1, ...., Hddn);
- if the comparison of the corresponding fractal exponents of the two sets reveals at least one difference, a fault of the corresponding internal configuration is indicated.

Preferably, the diagnostic method described is associated with a computation and correction method to generate a diagnostic and corrective method where:
- the computation step (10) is performed after the diagnostic step, where the computation step comprises a corrective procedure of the result to reduce or eliminate decoherence errors of the quantum-mechanical states involved in the quantum computation.

According to some preferred embodiments, said computation step comprises:
- reiterating a desired quantum computation until the deviation from the mean value of the output, or of a parameter thereof, is reduced to zero with a value of at least two, preferably three, more preferably five statistical sigmas.

This is a definition of a zero limit, i.e., it means that the deviation from the mean value tends to the zero limit with a value of at least two, preferably three, more preferably five statistical sigmas.

Preferably, the desired quantum computation is a calculation with stochastic output where the method comprises the steps of:
- characterising the output with a fractal exponent, e.g., the Hurst exponent (Hc)
- accepting the result when, repeating the computation, the average value of the fractal exponents of the reiterations becomes stable.

For example, said value is considered stable when, reiterating the computation, the deviation from the mean value of said fractal exponents is reduced to zero with a value of at least two, preferably three, more preferably five statistical sigmas.

If the desired quantum computation is instead a deterministic computation where the method comprises the steps of:
- accepting the result when, reiterating the computation, the average value of the result becomes stable.

For example, said value is considered stable when, reiterating the computation, the deviation from the mean value of the result is reduced to zero with a value of at least two, preferably three, more preferably five statistical sigmas.

According to a second general aspect thereof, the invention relates to a quantum apparatus comprising at least one quantum circuit 60, stochastic analysis means 75 of the output, means for generating at least one input white noise (80), where the stochastic analysis means of the output comprise at least one piece of memory 80 in which at least one piece of software is stored which is configured to carry out the diagnostic method of the type indicated above.

Preferably, the stochastic analysis means of the output comprise at least one piece of memory in which a piece of software is stored which is configured to carry out a diagnostic and corrective method of the type indicated above.

### DETAILED DESCRIPTION

Further characteristics and advantages of the present invention will become clearer from the following detailed description of some preferred embodiments thereof, with reference to the appended drawings and provided by way of indicative and non-limiting example. In such drawings:
- figure 1 schematically shows the flow sheet of a diagnostic and corrective method according to the present invention;
- figure 2 schematically shows a quantum apparatus according to the present invention.

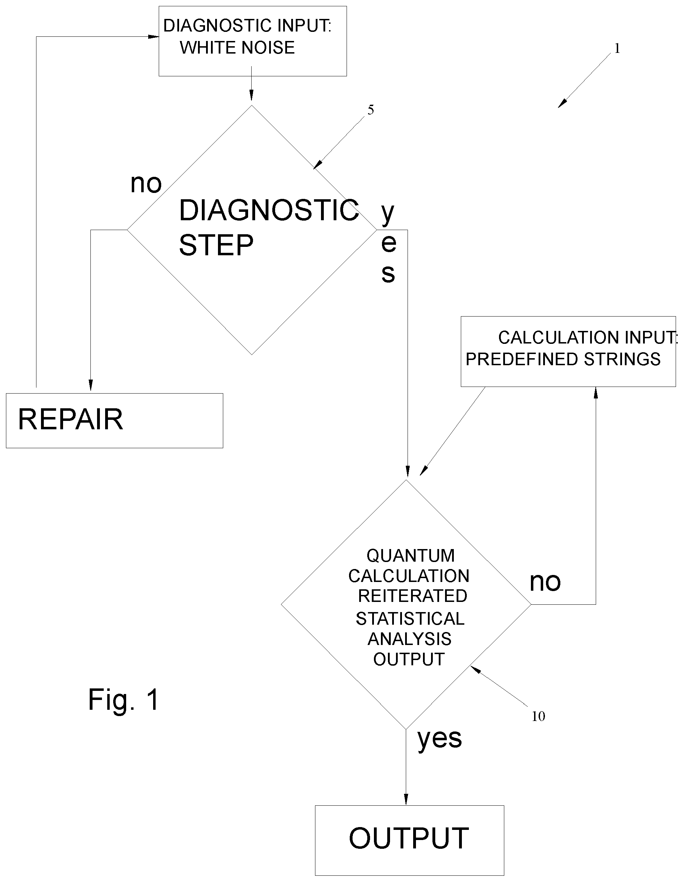

With reference to figure 1, the diagnostic and corrective method is indicated as a whole by reference 1 and comprises a diagnostic method 5 and a computation and correction method 10.

Preferably at least part of the diagnostic method is carried out at the power up of the device, such as the bootstrap in the case of a quantum computer.

The diagnostic method 5 comprises the following steps:
- arranging a quantum computing apparatus
- characterising the quantum computing apparatus, obtaining and storing in a diagnostic register an initial output stochastic distribution characteristic of said apparatus, referred to as characteristic stochastic distribution hereinafter
- characterising at least one operation of the apparatus, after obtaining the characteristic stochastic distribution, obtaining an output diagnostic stochastic distribution of said apparatus, referred to as diagnostic stochastic distribution hereinafter
- comparing the characteristic stochastic distribution and the diagnostic distribution to establish the deviation between the two;
- if the deviation is greater than a predetermined value, generating at least one fault indication.

The characteristic output stochastic distribution is generated using as input a stochastic process known in stochastic analysis as 'white noise' (also known as classical Brownian motion) with Hurst exponent H=1/2. An ideal apparatus without decoherence or faults also generates white noise in output (H=1/2). However, such an apparatus is (for now) not feasible, and the output stochastic distribution will always result in 'coloured noise' (also known as fractional Brownian motion). Nevertheless, the output coloured noise is characteristic of the apparatus, and in general can be used as a term of comparison to detect faults. However, the ideal case is not excluded here, namely that the output is still white noise and its use as a term of comparison..

The computation used to generate the characteristic stochastic distribution and the diagnostic stochastic distribution is the same, and is a predetermined computation chosen among any stochastic test computation, such as the well-known 'boson sampling.'

A fractional Brownian motion is a stochastic process with a distribution characterised by a precise index related to the fractal dimension of the process itself, which is described by means of a fractal exponent or index (fractional is a synonym).

In general, therefore, each 'real' apparatus will be characterised by an output with a characteristic stochastic distribution, i.e., by its own stochastic 'noise' or rather by a type of stochastic process describable by a fractional Brownian motion and thus by a fractal exponent or index.

The deviation between the two stochastic processes indicated by the corresponding fractal indices, characteristic of the apparatus 'with fault-free operation' and that of the apparatus with 'faulty operation' is therefore an indication of the presence of faults.

The deviation between the stochastic distributions can be established in various manners. A very reliable and practical procedure to assess this is Hurst's R/S analysis, or Hurst exponent analysis. Such an analysis associates values of a variable, said Hurst exponent H, with a stochastic process in general or any historical data series. Hurst analysis is applied here to the outputs of the apparatus, i.e., both the characteristic stochastic distribution and the diagnostic distribution, and for each generates a value of the H exponent. The Hurst exponent is known to take values between 0 and 1, where H=1/2 represents the ideal case of classical Brownian motion, and is thus the value of the input 'white noise.'

As mentioned, the output 'coloured noise' is instead a fractional Brownian motion, and is characterised by a Hurst exponent H ≠ 1/2 .

However, this does not exclude the ideal case in which the output is still white noise with H=1/2.

The apparatus is characterised by a precise factory characteristic value of the Hurst exponent of its outputs, referred to as Hdf hereinafter. If the diagnostic method finds a diagnostic stochastic distribution with a value other than Hdf (within predetermined limits), then the apparatus has a fault.

The diagnostic method 5 of the present invention identifies at least one stochastic distribution characteristic of a new apparatus in its early stages of life, such as immediately after construction, or generally upon leaving the factory. Such a distribution, or at least a piece of data associated therewith, e.g., the relative Hurst exponent Hdf, is saved in a characterising register of the apparatus, called the 'diagnostic register,' and is in general a kind of 'factory marking' which will accompany the apparatus throughout its life.

After storing said characteristic stochastic distribution, a diagnostic step is carried out, e.g., at each power-up of the apparatus, e.g. at the bootstrap. In this step, at least one diagnostic stochastic output distribution is obtained corresponding to the same quantum information pathway with which the characteristic stochastic distribution was generated. The diagnostic stochastic distribution is also generated using stochastic white noise as input. Such an output will have a Hurst exponent Hdd. At this point, the diagnostic stochastic distribution is compared with the characteristic stochastic distribution, and if they do not coincide (within a predetermined error), it means that there is a fault.

The comparison through Hurst exponents is very practical. In fact, if Hdd is different from Hdf, unless there is a predetermined error, there is a fault, and the apparatus can signal it, e.g., by emitting a corresponding signal.

In order to ensure that the comparison only reveals faults, i.e., is not distorted by computation errors due to decoherence, it is possible to reiterate the computations to obtain both the characteristic and diagnostic stochastic distribution until the deviation from the mean value of Hdf and Hdd is reduced to zero with a value of at least two, preferably three, more preferably five statistical sigmas.

We have observed that if the quantum apparatus comprises a plurality of internal configurations, e.g., of at least one quantum processor thereof, the method comprises obtaining a characteristic and diagnostic stochastic distribution for each thereof, i.e., in practice one for each pathway in which the quantum information flows, e.g., one for each quantum circuit of the processor. Therefore, in such a case, the step of obtaining at least one characteristic stochastic distribution comprises the step of obtaining a set of characteristic stochastic distributions, identified by relative fractal exponents Hdf1,....Hdfn, where each exponent of the set corresponds to the various internal configurations of the quantum apparatus. Such a set is stored in the diagnostic register.

Similarly, the step of obtaining at least one diagnostic stochastic distribution comprises the step of obtaining a corresponding set of subsequent diagnostic stochastic distributions, and the relative fractal exponents, e.g., Hurst exponents Hdd1, ...., Hddn.

By comparing the corresponding stochastic distributions, it is possible to determine which 'information path' (part of the processor) has a fault.

In practical use, a suitably generated sequence of symbols can be used as input white noise to have H=1/2. The apparatus will in this case be able to return a string of symbols which will no longer be white noise, but a noise characterised by the exponents Hdf and Hdd, which as mentioned, in fault-free operation must remain stable, i.e., coincide within a predetermined error.

In general, we can indicate that the comparison of stochastic distributions comprises the step of:
- generating at least one value of an indicative parameter for comparing two corresponding output stochastic distributions (output noise), one characteristic and one diagnostic, e.g., a value of a fractal exponent, e.g., the characteristic Hurst fractal exponent H.

It is also possible to employ other types of stochastic tests for diagnostic purposes. Among these, the favourites are those which make use of fractal geometry, e.g. that employed by Nelson and Nottale to describe quantum phenomena.

If the diagnostic procedure 5 does not reveal any faults, it is possible to proceed to the quantum computation and correction procedure 10 comprising an error correction procedure due to the quantum-mechanical states involved in the quantum computation, where such a step comprises:
- reiterating a desired quantum computation until the deviation from the mean value of the output, or of a parameter thereof, is reduced to zero with a value of at least two, preferably three, more preferably five statistical sigmas.

In particular, in the event of a computation with stochastic output, i.e., involving stochastic processes or generating them from quantum processes, we can characterise the output with a fractal exponent, e.g., the Hurst exponent Hc. It is then possible to control the goodness of the computation by checking that, reiterating it more than once, the fractal exponent, e.g., Hc, remains stable, within a predetermined error. For example, it is possible to accept the computation as correct if, reiterating it, the deviation from the mean value is 2, preferably 3, more preferably 4 and even more preferably 5 sigmas.

In the event of a deterministic computation, i.e., when the result is not a stochastic output or does not directly use stochastic processes (e.g., when calculating prime numbers or breaking a cryptographic key), then the computation is repeated and the result is accepted when it is stable (within a predetermined error), i.e., when the deviation from the mean value is 2, preferably 3, more preferably 4 and even more preferably 5 sigmas.

The advantage is that the quantum computation is exponential, whereas the procedure is obtained by repeating (thus with a linear procedure) the computation a number of times.

Theoretically, it is possible to use any computation error correction procedure, thus also procedures with steps other than that described, by way of non-exhaustive example we cite entanglement, 'heralded photon' or squeezed states techniques.

By virtue of analysing the deviations of the obtained values of H, it is possible to monitor the correct operation of the various devices used in the computation, where we reiterate that the term 'computation' is understood in a broad sense.

In fact, the analysis proposed above is also applicable to cases of cryptographic key creation or generation of events, various codes or generic sequences of symbols.

By analysing the deviations, it is possible to identify any faults in the hardware, in the simulation thereof, in the software and/or in the management thereof in order to correct and possibly reduce any future computation errors.

One example is the computation errors which constitute the fundamental problem of quantum computing, related to the decoherence of the quantum states used in the computation.

For example, in the construction of a generic cryptographic key (classical or quantum), this avoids anomalies which could lead to the presence of information which would allow the violation thereof.

A further example is the non-Markovianity of a symbol sequence used for classical or quantum cryptography which may not be optimal for encrypting/decrypting general information.

A further example are detection instruments using single quanta or sets of such which have a characteristic intrinsic noise such as photo detectors or others related thereto, e.g. quantum boundary astronomy or other scientific applications.

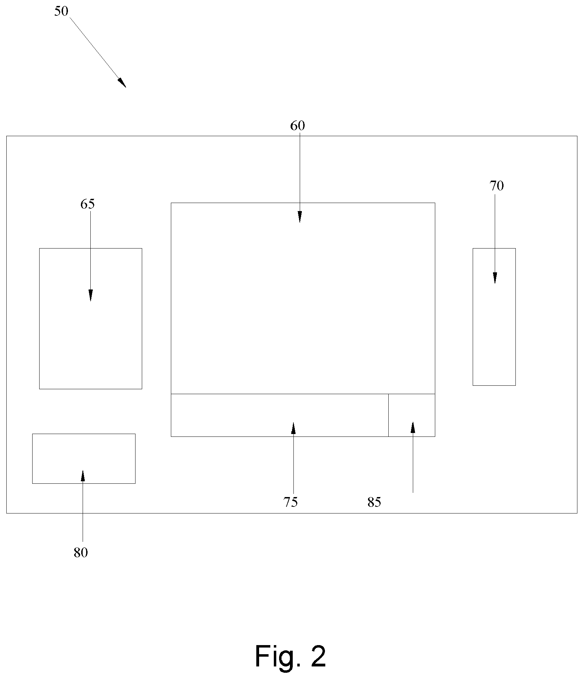

With reference to figure 2, a quantum apparatus according to the present invention is schematically illustrated, indicated as a whole with reference number 50.

The quantum apparatus comprises at least one quantum circuit 60, at least one input register 65, at least one output register 70 and stochastic analysis means 75 of the output, means for creating input white noise 80.

The stochastic analysis means of the output comprise at least one piece of memory 85 (classical or quantum) in which at least one piece of software configured to carry out the diagnostic step 5 above is stored.

The stochastic analysis means of the output further comprise at least one piece of memory in which a piece of software configured to perform the computation step 10 above is stored.

### GENERAL INTERPRETATION OF TERMS

In understanding the object of the present invention, the term "comprising" and its derivatives, as used herein, are intended as open-ended terms that specify the presence of declared characteristics, elements, components, groups, integers and/or steps, but do not exclude the presence of other undeclared characteristics, elements, components, groups, integers and/or steps. The above also applies to words that have similar meanings such as the terms "comprised", "have" and their derivatives. Furthermore, the terms "part", "section", "portion", "member" or "element" when used in the singular can have the double meaning of a single part or a plurality of parts. As used herein to describe the above executive embodiment(s), the following directional terms "forward", "backward", "above", "under", "vertical", "horizontal", "below" and "transverse", as well as any other similar directional term, refers to the embodiment described in the operating position. Finally, terms of degree such as "substantially", "about" and "approximately" as used herein are intended as a reasonable amount of deviation of the modified term such that the final result is not significantly changed.

While only selected embodiments have been chosen to illustrate the present invention, it will be apparent from this description to those skilled in the art that various modifications and variations can be made without departing from the scope of the invention as defined in the appended claims. For example, the sizes, shape, position or orientation of the various components can be modified as needed and/or desired. The components shown which are directly connected or in contact with each other can have intermediate structures arranged between them. The functions of one element can be performed by two and vice versa. The structures and functions of one embodiment can be adopted in another embodiment. All the advantages of a particular embodiment do not necessarily have to be present at the same time. Any characteristic that is original compared to the prior art, alone or in combination with other characteristics, should also be considered a separate description of further inventions by the applicant, including the structural and/or functional concepts embodied by such characteristics. Therefore, the foregoing descriptions of the embodiments according to the present invention are provided for illustrative purposes only and not for the purpose of limiting the invention as defined by the appended claims.

## Claims

1. Diagnostic method of a quantum apparatus comprising the following steps:
- arranging a quantum computing apparatus
- characterising a characteristic operation of the quantum computing apparatus, obtaining and storing an output characteristic noise corresponding to an input white noise;
- characterising at least one diagnostic operation of the apparatus following that of the previous step, obtaining an output diagnostic noise corresponding to an input white noise;
- performing a stochastic analysis comparing the output diagnostic noise and the stored output characteristic noise, where if the deviation therebetween is greater than a predetermined value, generating at least one fault indication
wherein the quantum apparatus comprises at least one quantum circuit (60), stochastic analysis means (75) of the output, means for generating at least one input white noise (80), wherein the stochastic analysis means of the output comprise at least one piece of memory (85) in which at least one piece of software configured to carry out the diagnostic method is stored and
said outputs are obtained by means of quantum computation starting from said inputs.

2. Method according to claim **1, characterized in that** the apparatus is **characterised by** a precise factory characteristic value of the Hurst exponent of its outputs, referred to as Hdf hereinafter, if the diagnostic method finds a diagnostic stochastic distribution with a value other than Hdf within a predetermined limit, then the apparatus has a fault.

3. Method according to claim 2 **characterized in that** the diagnostic method identifies at least one stochastic distribution characteristic of said quantum apparatus when it is a new apparatus in its early stages of life, the relative Hurst exponent Hdf of said distribution is saved in a characterising register of the apparatus, called the 'diagnostic register,' and is in general a kind of 'factory marking' which will accompany the apparatus throughout its life;
after storing said characteristic stochastic distribution, a diagnostic step is carried out, at each power-up of the apparatus, e.g. at the bootstrap
, in said diagnostic step, at least one diagnostic stochastic output distribution is obtained corresponding to a same quantum information pathway with which the characteristic stochastic distribution was generated,
at this point, the diagnostic stochastic distribution is compared with the characteristic stochastic distribution, though they Hurst exponents, and if they do not coincide (within a predetermined error), it means that there is a fault.

4. method according to any one of the preceding claims **characterized in that** the computation used to generate the characteristic stochastic distribution and the diagnostic stochastic distribution is the same, and is a predetermined computation chosen among any stochastic test computation, such as the well-known 'boson sampling'.

5. Method according to any one of the preceding claims **characterized in that** said deviation between the output noises is a deviation between two stochastic processes and is indicated by corresponding fractal indices, respectively characteristic of an apparatus 'with fault-free operation' and of an apparatus with 'faulty operation'.

6. Diagnostic method according to claim 1, **characterised in that** said output noise comprises at least one characterising stochastic distribution and at least one diagnostic stochastic distribution, respectively;
comparing the diagnostic stochastic distribution with the characteristic stochastic distribution, and if the deviation therebetween is greater than said predetermined value, generating said at least one indication of a fault.

7. Method according to any one of the preceding claims, **characterised in that** said stochastic analysis is done using a stochastic test for diagnostic purposes using fractal geometry.

8. Method according to claim 7, **characterised in that** said stochastic analysis:
- associates at least one value of at least one fractal comparison parameter with each of the two output noises,
- reiterates the computations for obtaining both output characteristic and diagnostic noise until the deviation from the mean value of each of said respective comparison parameters tends to the zero limit with a value of at least two statistical sigma;
said comparison between the output diagnostic noise and the stored output characteristic noise comprises that if said mean values with said deviation reduced to zero with a value of at least two statistical sigma of said parameters of the two outputs parameters of the two outputs have a difference therebetween greater than said predetermined value, said at least one fault indication is generated.

9. Method according to claim 8, **characterised in that** the fractal parameter is the Hurst exponent, and where the method associates:
- a value H = 1/2 of the Hurst exponent to the input white noise
- a value 0<Hdf<1 of the Hurst exponent to the characteristic output noise
- a value 0<Hdd<1 of the Hurst exponent to the diagnostic output noise,
where if the average values with said deviation reduced to zero of Hdd and Hdf have a difference therebetween greater than said predetermined value, a fault is reported.

10. Method according to claim 8 or 9, **characterised in that**:
- the step of obtaining and storing an output characteristic noise comprises the step of obtaining a set of characteristic stochastic distributions, identified by relative fractal exponents (Hdf1,....Hdfn), where each exponent of the set corresponds to an internal configuration of the quantum apparatus;
- similarly, the step of obtaining an output diagnostic noise comprises the step of obtaining a corresponding set of successive stochastic diagnostic distributions, and the relative fractal exponents, (Hdd1, ...., Hddn);
- if the comparison of the corresponding fractal exponents of the two sets reveals at least one difference therebetween greater than said predetermined value, a fault of the corresponding internal configuration is indicated.

11. Diagnostic and corrective method of a quantum apparatus comprises the following steps:
- a diagnostic step (5) comprising a method according to any one of the preceding claims
- a computation step (10) performed after the diagnostic step, where the computation step comprises a corrective procedure of the result to reduce or eliminate decoherence errors of the quantum-mechanical states involved in the quantum computation.

12. Method according to claim 11, **characterised in that** said computation step comprises:
- reiterating a desired quantum computation until the deviation from the mean value of the output, or of a parameter thereof, is reduced to zero with a value of at least two, statistical sigmas.

13. Method according to claim 12, **characterised in that** the desired quantum computation is one of the following:
• a computation with stochastic output where the method comprises the steps of:
- characterising the output with a fractal exponent, e.g., the Hurst exponent (Hc)
- accepting the result when, repeating the computation, the average value of the fractal exponents of the reiterations becomes stable
where said value is considered stable when, reiterating the computation, the deviation from the mean value of said fractal exponents is reduced to zero with a value of at least two statistical sigmas; or
• a deterministic computation where the method comprises the steps of:
- accepting the result when, reiterating the computation, the average value of the result becomes stable
where said value is considered stable when, reiterating the computation, the deviation from the mean value of the result is reduced to zero with a value of at least two statistical sigmas.

14. Quantum apparatus comprising at least one quantum circuit (60), stochastic analysis means (75) of the output, means for generating at least one input white noise (80), wherein the stochastic analysis means of the output comprise at least one piece of memory (85) in which at least one piece of software configured to carry out the diagnostic method according to any one of claims 1 to 6 is stored, the piece of software being configured to carry out the diagnostic method when executed on the apparatus.

15. Apparatus according to claim 14, **characterised in that** the stochastic analysis means of the output comprises at least one piece of memory in which a piece of software configured to carry out a method according to any one of claims 7 to 10 is stored, the piece of software being configured to carry out the method when executed on the apparatus.

## Patentansprüche

1. Diagnoseverfahren einer Quantenvorrichtung, umfassend folgende Schritte:
- Anordnen einer Quantencomputervorrichtung
- Charakterisieren eines charakteristischen Betriebs der Quantencomputervorrichtung, Erhalten und Speichern eines charakteristischen Ausgangsrauschens, das einem weißen Eingangsrauschen entspricht;
- Charakterisieren mindestens eines Diagnosebetriebs der Vorrichtung im Anschluss an den des vorherigen Schritts, Erhalten eines Ausgangsdiagnoserauschens, das einem weißen Eingangsrauschen entspricht;
- Durchführen einer stochastischen Analyse, die das diagnostische Ausgangsrauschen und das gespeicherte charakteristische Ausgangsrauschen vergleicht, wobei, wenn die Abweichung zwischen ihnen größer als ein vorbestimmter Wert ist, mindestens eine Fehleranzeige erzeugt wird
wobei die Quantenvorrichtung mindestens eine Quantenschaltung (60), stochastische Analysemittel (75) des Ausgangs, Mittel zum Erzeugen mindestens eines weißen Eingangsrauschens (80) umfasst, wobei der Ausgang mindestens ein Speicherelement (85) in den stochastischen Analysemitteln umfasst, in dem mindestens ein zur Durchführung des Diagnoseverfahrens konfiguriertes Softwareelement gespeichert ist
und
die Ausgänge durch Quantenberechnung ausgehend von den Eingängen erhalten werden.

2. Verfahren nach Anspruch 1, **dadurch gekennzeichnet, dass** die Vorrichtung durch einen präzisen charakteristischen Werkswert des Hurst-Exponenten ihrer Ausgänge, im Folgenden als Hdf bezeichnet, gekennzeichnet ist, wenn das Diagnoseverfahren eine diagnostische stochastische Verteilung mit einem anderen Wert als Hdf innerhalb einer vorbestimmten Grenze findet, dann weist die Vorrichtung einen Fehler auf.

3. Verfahren nach Anspruch 2, **dadurch gekennzeichnet, dass** das Diagnoseverfahren mindestens eine stochastische Verteilung charakteristisch für die Quantenvorrichtung identifiziert, wenn es sich um eine neue Vorrichtung in ihren frühen Lebensphasen handelt, der relative Hurst-Exponent Hdf der Verteilung in einem charakteristischen Register der Vorrichtung, dem sogenannten "Diagnoseregister", gespeichert wird und im Allgemeinen eine Art "Fabrikmarkierung" ist, die die Vorrichtung während ihrer gesamten Lebensdauer begleiten wird;
nach dem Speichern der charakteristischen stochastischen Verteilung bei jedem Einschalten der Vorrichtung, z. B. am Bootstrap, ein Diagnoseschritt durchgeführt wird,
in dem Diagnoseschritt mindestens eine diagnostische stochastische Ausgangsverteilung erhalten wird, die einem gleichen Quanteninformationsweg entspricht, mit dem die charakteristische stochastische Verteilung erzeugt wurde,
an dieser Stelle wird die diagnostische stochastische Verteilung mit der charakteristischen stochastischen Verteilung, durch die Hurst-Exponenten, verglichen und wenn sie nicht übereinstimmen (innerhalb eines vorbestimmten Fehlers), bedeutet dies, dass ein Fehler vorliegt.

4. Verfahren nach einem der vorhergehenden Ansprüche, **dadurch gekennzeichnet, dass** die Berechnung, die verwendet wird, um die charakteristische stochastische Verteilung zu erzeugen und die diagnostische stochastische Verteilung die gleiche ist und eine vorbestimmte Berechnung ist, die aus einer beliebigen stochastischen Testberechnung ausgewählt wird, wie etwa der bekannten "Bosonenabtastung".

5. Verfahren nach einem der vorhergehenden Ansprüche, **dadurch gekennzeichnet, dass** die Abweichung zwischen den Ausgangsräuschen eine Abweichung zwischen zwei stochastischen Prozessen ist und durch entsprechende Fraktalindizes angezeigt wird, die jeweils für eine Vorrichtung "mit fehlerfreiem Betrieb" und für eine Vorrichtung mit "fehlerhaftem Betrieb" charakteristisch sind.

6. Diagnoseverfahren nach Anspruch 1, **dadurch gekennzeichnet, dass** das Ausgangsrauschen mindestens eine charakterisierende stochastische Verteilung bzw. mindestens eine diagnostische stochastische Verteilung umfasst;
Vergleichen der diagnostischen stochastischen Verteilung mit der charakteristischen stochastischen Verteilung, und wenn die Abweichung zwischen ihnen größer als der vorbestimmte Wert ist, Erzeugen der mindestens einen Anzeige eines Fehlers.

7. Verfahren nach einem der vorhergehenden Ansprüche, **dadurch gekennzeichnet, dass** die stochastische Analyse unter Verwendung eines stochastischen Tests für diagnostische Zwecke unter Verwendung der fraktalen Geometrie durchgeführt wird.

8. Verfahren nach Anspruch 7, **dadurch gekennzeichnet, dass** die stochastische Analyse:
- mit jedem der zwei Ausgangsräusche mindestens einen Wert mindestens eines fraktalen Vergleichsparameters assoziiert,
- wiederholt die Berechnungen zum Erhalten sowohl der Ausgangscharakteristik als auch des Diagnoserauschens, bis die Abweichung vom Mittelwert jedes der jeweiligen Vergleichsparameter mit einem Wert von mindestens zwei statistischen Sigmas zur Nullgrenze tendiert;
der Vergleich zwischen dem Ausgangsdiagnoserauschen und dem gespeicherten charakteristischen Ausgangsrauschen umfasst, dass, wenn die Mittelwerte mit der auf Null reduzierten Abweichung mit einem Wert von mindestens zwei statistischen Sigmas der Parameter der zwei Ausgangsparameter der zwei Ausgänge eine Differenz zwischen ihnen aufweisen, die größer als der vorbestimmte Wert ist, die mindestens eine Fehleranzeige erzeugt wird.

9. Verfahren nach Anspruch 8, **dadurch gekennzeichnet, dass** der fraktale Parameter der Hurst-Exponent ist, und wobei das Verfahren assoziiert:
- einen Wert H = 1/2 des Hurst-Exponenten mit dem weißen Eingangsrauschen
- einen Wert 0<Hdf <1 des Hurst-Exponenten mit dem charakteristischen Ausgangsrauschen
- einen Wert 0<Hdd<1 des Hurst-Exponenten mit dem diagnostischen Ausgangsrauschen,
wobei, wenn die Durchschnittswerte mit der auf Null reduzierten Abweichung von Hdd und Hdf eine Differenz zwischen ihnen aufweisen, die größer als der vorbestimmte Wert ist, ein Fehler gemeldet wird.

10. Verfahren nach Anspruch 8 oder 9, **dadurch gekennzeichnet, dass**:
- der Schritt des Erhaltens und Speicherns eines charakteristischen Ausgangsrauschens den Schritt des Erhaltens eines Satzes von charakteristischen stochastischen Verteilungen umfasst, die durch relative fraktale Exponenten (Hdf1, ....Hdfn) identifiziert sind, wobei jeder Exponent des Satzes einer internen Konfiguration der Quantenvorrichtung entspricht;
- in ähnlicher Weise umfasst der Schritt des Erhaltens eines Ausgangsdiagnoserauschens den Schritt des Erhaltens eines entsprechenden Satzes aufeinanderfolgender stochastischer Diagnoseverteilungen und der relativen fraktalen Exponenten (Hdd1, ...., Hddn);
- wenn der Vergleich der entsprechenden fraktalen Exponenten der zwei Sätze mindestens eine Differenz zwischen ihnen zeigt, die größer als der vorbestimmte Wert ist, wird ein Fehler der entsprechenden internen Konfiguration angezeigt.

11. Diagnose- und Korrekturverfahren einer Quantenvorrichtung umfasst die folgenden Schritte:
- einen Diagnoseschritt (5), der ein Verfahren nach einem der vorhergehenden Ansprüche umfasst
- einen Berechnungsschritt (10), der nach dem Diagnoseschritt durchgeführt wird, wobei der Berechnungsschritt eine Korrekturprozedur des Ergebnisses umfasst, um Dekohärenzfehler der an der Quantenberechnung beteiligten quantenmechanischen Zustände zu reduzieren oder zu eliminieren.

12. Verfahren nach Anspruch 11, **dadurch gekennzeichnet, dass** der Berechnungsschritt umfasst:
- Wiederholen einer gewünschten Quantenberechnung, bis die Abweichung vom Mittelwert des Ausgangs oder eines Parameters davon mit einem Wert von mindestens zwei statistischen Sigmas auf Null reduziert ist.

13. Verfahren nach Anspruch 12, **dadurch gekennzeichnet, dass** die gewünschte Quantenberechnung eine der folgenden ist:
• eine Berechnung mit stochastischem Ausgang, wobei das Verfahren die folgenden Schritte umfasst:
- Charakterisieren des Ausgangs mit einem fraktalen Exponenten, z. B. dem Hurst-Exponenten (He)
- Akzeptieren des Ergebnisses, wenn bei Wiederholung der Berechnung der Durchschnittswert der fraktalen Exponenten der Wiederholungen stabil wird
wobei der Wert als stabil gilt, wenn, die Berechnung wiederholend, die Abweichung vom Mittelwert der fraktalen Exponenten mit einem Wert von mindestens zwei statistischen Sigmas auf Null reduziert wird; oder
• eine deterministische Berechnung, wobei das Verfahren die folgenden Schritte umfasst:
- Akzeptieren des Ergebnisses, wenn, die Berechnung wiederholend, der Durchschnittswert des Ergebnisses stabil wird
wobei der Wert als stabil gilt, wenn, die Berechnung wiederholend, die Abweichung vom Mittelwert des Ergebnisses mit einem Wert von mindestens zwei statistischen Sigmas auf Null reduziert wird.

14. Quantenvorrichtung, umfassend mindestens eine Quantenschaltung (60), stochastische Analysemittel (75) des Ausgangs, Mittel zum Erzeugen mindestens eines weißen Eingangsrauschens (80), wobei die stochastischen Analysemittel des Ausgangs mindestens ein Speicherelement (85) umfassen, in dem mindestens ein Softwareelement gespeichert ist, das konfiguriert ist, um das Diagnoseverfahren nach einem der Ansprüche 1 bis 6 durchzuführen, wobei das Softwareelement konfiguriert ist, um das Diagnoseverfahren durchzuführen, wenn es auf der Vorrichtung ausgeführt wird.

15. Vorrichtung nach Anspruch 14, **dadurch gekennzeichnet, dass** das stochastische Analysemittel des Ausgangs mindestens ein Speicherelement umfasst, in dem ein Softwareelement gespeichert ist, das konfiguriert ist, um ein Verfahren nach einem der Ansprüche 7 bis 10 durchzuführen, wobei das Softwareelement konfiguriert ist, um das Verfahren durchzuführen, wenn es auf der Vorrichtung ausgeführt wird.

## Revendications

1. Procédé de diagnostic d'un appareil quantique comprenant les étapes suivantes :
- disposer un appareil de calcul quantique
- caractériser une opération caractéristique de l'appareil de calcul quantique, obtenir et stocker un bruit caractéristique de sortie correspondant à un bruit blanc d'entrée ;
- caractériser au moins une opération de diagnostic de l'appareil suivant celle de l'étape précédente, obtenir un bruit de diagnostic de sortie correspondant à un bruit blanc d'entrée ;
- effectuer une analyse stochastique comparant le bruit de diagnostic de sortie et le bruit caractéristique de sortie stocké, et si l'écart entre les deux est supérieur à une valeur prédéterminée, générer au moins une indication de défaut
dans lequel l'appareil quantique comprend au moins un circuit quantique (60), des moyens d'analyse stochastique (75) de la sortie, des moyens pour générer au moins un bruit blanc d'entrée (80), dans lequel la sortie comprend au moins une pièce de mémoire (85) dans les moyens d'analyse stochastique de laquelle est stocké au moins un logiciel configuré pour mettre en œuvre le procédé de diagnostic
et
lesdites sorties sont obtenues au moyen d'un calcul quantique à partir desdites entrées.

2. Procédé selon la revendication 1, **caractérisé en ce que** l'appareil est **caractérisé par** une valeur caractéristique d'usine précise de l'exposant de Hurst de ses sorties, appelée Hdf ci-après, si le procédé de diagnostic trouve une distribution stochastique de diagnostic avec une valeur autre que Hdf dans une limite prédéterminée, alors l'appareil présente un défaut.

3. Procédé selon la revendication 2, **caractérisé en ce que** le procédé de diagnostic identifie au moins une distribution stochastique caractéristique dudit appareil quantique lorsqu'il s'agit d'un nouvel appareil au début de sa vie, l'exposant de Hurst relatif Hdf de ladite distribution est enregistré dans un registre de caractérisation de l'appareil, appelé "registre de diagnostic", et constitue en général une sorte de "marquage d'usine" qui accompagnera l'appareil tout au long de sa durée de vie ;
après avoir stocké ladite distribution stochastique caractéristique, une étape de diagnostic est effectuée à chaque mise sous tension de l'appareil, par exemple lors de l'amorçage,
dans ladite étape de diagnostic, au moins une distribution stochastique de sortie de diagnostic est obtenue, correspondant à une même voie d'information quantique avec laquelle la distribution stochastique caractéristique a été générée,
à ce stade, la distribution stochastique de diagnostic est comparée à la distribution stochastique caractéristique, par le biais des exposants de Hurst, et si elles ne coïncident pas (dans une marge d'erreur prédéterminée), cela signifie qu'il y a un défaut.

4. Procédé selon l'une quelconque des revendications précédentes, **caractérisé en ce que** le calcul utilisé pour générer la distribution stochastique caractéristique et la distribution stochastique de diagnostic est le même, et qu'il s'agit d'un calcul prédéterminé choisi parmi tout calcul de test stochastique, tel que l'"échantillonnage de bosons" bien connu.

5. Procédé selon l'une quelconque des revendications précédentes, **caractérisé en ce que** ledit écart entre les bruits de sortie est un écart entre deux processus stochastiques et est indiqué par des indices fractals correspondants, respectivement caractéristiques d'un appareil "à fonctionnement sans défaut" et d'un appareil à "fonctionnement défectueux".

6. Procédé de diagnostic selon la revendication 1, **caractérisé en ce que** ledit bruit de sortie comprend au moins une distribution stochastique de caractérisation et au moins une distribution stochastique de diagnostic, respectivement ;
comparer la distribution stochastique de diagnostic à la distribution stochastique caractéristique et, si l'écart entre les deux est supérieur à ladite valeur prédéterminée, générer ladite au moins une indication de défaut.

7. Procédé selon l'une quelconque des revendications précédentes, **caractérisé en ce que** ladite analyse stochastique est effectuée à l'aide d'un test stochastique à des fins de diagnostic utilisant la géométrie fractale.

8. Procédé selon la revendication 7, **caractérisé en ce que** ladite analyse stochastique :
- associe au moins une valeur d'au moins un paramètre de comparaison fractale à chacun des deux bruits de sortie,
- réitère les calculs pour obtenir les caractéristiques de sortie et le bruit de diagnostic jusqu'à ce que l'écart par rapport à la valeur moyenne de chacun desdits paramètres de comparaison respectifs tende vers la limite zéro avec une valeur d'au moins deux sigmas statistiques ;
ladite comparaison entre le bruit de diagnostic de sortie et le bruit caractéristique de sortie stocké comprend que si lesdites valeurs moyennes avec ledit écart réduit à zéro avec une valeur d'au moins deux sigmas statistiques desdits paramètres des deux sorties paramètres des deux sorties ont une différence entre eux supérieure à ladite valeur prédéterminée, ladite au moins une indication de défaut est générée.

9. Procédé selon la revendication 8, **caractérisé en ce que** le paramètre fractal est l'exposant de Hurst, et où le procédé associe :
- une valeur H = 1/2 de l'exposant de Hurst au bruit blanc d'entrée
- une valeur 0<Hdf<1 de l'exposant de Hurst au bruit caractéristique de sortie
- une valeur 0<Hdd<1 de l'exposant de Hurst pour le bruit de sortie de diagnostic,
si les valeurs moyennes de Hdd et de Hdf, dont ledit écart a été ramené à zéro, présentent une différence supérieure à ladite valeur prédéterminée, un défaut est signalé.

10. Procédé selon la revendication 8 ou 9, **caractérisé en ce que** :
- l'étape consistant à obtenir et à stocker un bruit caractéristique de sortie comprend l'étape consistant à obtenir un ensemble de distributions stochastiques caractéristiques, identifiées par des exposants fractals relatifs (Hdf1, ....Hdfn), où chaque exposant de l'ensemble correspond à une configuration interne de l'appareil quantique ;
- de même, l'étape consistant à obtenir un bruit de diagnostic de sortie comprend l'étape consistant à obtenir un ensemble correspondant de distributions de diagnostic stochastiques successives et les exposants fractals relatifs (Hdd1, ...., Hddn) ;
- si la comparaison des exposants fractals correspondants des deux ensembles révèle au moins une différence entre eux supérieure à ladite valeur prédéterminée, un défaut de la configuration interne correspondante est indiqué.

11. Procédé de diagnostic et de correction d'un appareil quantique comprend les étapes suivantes :
- une étape de diagnostic (5) comprenant un procédé selon l'une quelconque des revendications précédentes
- une étape de calcul (10) réalisée après l'étape de diagnostic, où l'étape de calcul comprend une procédure de correction du résultat afin de réduire ou d'éliminer les erreurs de décohérence des états mécaniques quantiques impliqués dans le calcul quantique.

12. Procédé selon la revendication 11, **caractérisé en ce que** ladite étape de calcul comprend :
- la réitération d'un calcul quantique souhaité jusqu'à ce que l'écart par rapport à la valeur moyenne de la sortie, ou d'un de ses paramètres, soit réduit à zéro avec une valeur d'au moins deux sigmas statistiques.

13. Procédé selon la revendication 12, **caractérisé en ce que** le calcul quantique souhaité est l'un des suivants :
• un calcul à sortie stochastique où le procédé comprend les étapes suivantes :
- caractériser la sortie par un exposant fractal, par exemple l'exposant de Hurst (He)
- accepter le résultat lorsque, en répétant le calcul, la valeur moyenne des exposants fractals des réitérations devient stable
où ladite valeur est considérée comme stable lorsque, en réitérant le calcul, l'écart par rapport à la valeur moyenne desdits exposants fractals est réduit à zéro avec une valeur d'au moins deux sigmas statistiques ; ou
• un calcul déterministe où le procédé comprend les étapes suivantes :
- accepter le résultat lorsque, en réitérant le calcul, la valeur moyenne du résultat devient stable
où ladite valeur est considérée comme stable lorsque, en réitérant le calcul, l'écart par rapport à la valeur moyenne du résultat est réduit à zéro avec une valeur d'au moins deux sigmas statistiques.

14. Appareil quantique comprenant au moins un circuit quantique (60), des moyens d'analyse stochastique (75) de la sortie, des moyens pour générer au moins un bruit blanc d'entrée (80), dans lequel les moyens d'analyse stochastique de la sortie comprennent au moins une pièce de mémoire (85) dans lequel au moins un logiciel configuré pour exécuter le procédé de diagnostic selon l'une quelconque des revendications 1 à 6 est stocké, le logiciel étant configuré pour exécuter le procédé de diagnostic lorsqu'il est exécuté sur l'appareil.

15. Appareil selon la revendication 14, **caractérisé en ce que** les moyens d'analyse stochastique de la sortie comprennent au moins une pièce de mémoire dans lequel est stocké un logiciel configuré pour mettre en œuvre un procédé selon l'une quelconque des revendications 7 à 10, le logiciel étant configuré pour mettre en œuvre le procédé lorsqu'il est exécuté sur l'appareil.
